# EUROPEAN PATENT APPLICATION

(11) **EP 4 772 746 A1**
(43) Date of publication of application: **08.07.2026**
(21) Application number: 25222200.5
(22) Date of filing: 10.12.2025
(51) Int. Cl.: F04B 39/06, F04B 39/10, F16K 11/07, F16K 31/08, F04C 29/04

(54) **ELECTRIC HYDRAULIC THERMAL CONTROL VALVE**

(30) Priority: 02.01.2025 US 202563741254 P; 05.12.2025 US 202519410258
(71) Applicant: Ingersoll-Rand Industrial U.S., Inc., Davidson, NC 28036-9000 (US)
(72) Inventor: Stratman, Taylor, Quincy, IL, 62305 (US); Gray, Luke, Loraine, IL, 62349 (US); Schreacke, Evan, Quincy, IL, 62305 (US)
(74) Representative: Murgitroyd & Company

(57) **Abstract**

An electric hydraulic thermal control valve (EHTCV) system (100) is provided which is configured to control the temperature of a coolant fluid circulated to a compressor airend. The EHTCV system comprises a valve housing portion (102) defining a chamber (104), a solenoid valve (110) coupled to the valve housing portion, and a movable sleeve (120) disposed within the chamber and configured to move between an idle position, at least one intermediate position, and an actuated position. The movable sleeve (120) has a first end chamber (136) coupled to the solenoid valve (110). When the solenoid valve (110) is energized, the solenoid valve directs a portion of a coolant mixed fluid prior to being separated to the valve housing portion (102) to move the movable sleeve (120) towards the actuated position, where the mixed fluid is a mix of coolant and working fluid compressed by the compressor airend.

## Description

### Background

Compressors increase the pressure of a compressible fluid (e.g., air, gas, etc.) by reducing the volume of the fluid. Often, compressors, particularly contact-cooled compressors and oil-free compressors, are staged so that the fluid is compressed several times in different stages, to further increase the discharge pressure of the fluid. As the pressure of the fluid increases, the temperature of the fluid also increases. In some compressors, the compressed fluid may be cooled between stages with a cooling system.

Contact-cooled fluid compressors include a coolant circulation system that circulates a coolant fluid (e.g., oil, water, etc.) that is injected into compression cavities within a compressor airend to aid cooling of the working fluid to be compressed. The coolant fluid may also provide lubrication and sealing of the compressor airend. A discharge stream of pressurized working fluid and coolant mixture is discharged from the contact-cooled airend at a high temperature and separated in a separator tank. After separation in the separator tank, the coolant fluid is directed to a temperature control valve system (TCV). Depending on the desired airend discharge temperature, the TCV system may direct the coolant fluid back to circulation in the contact-cooled airend or may direct the coolant fluid to a cooler for cooling prior to recirculation. Some TCVs regulate the airend discharge temperature by regulating the amount of coolant fluid that flows into the cooler. Other TCVs regulate the airend discharge temperature by regulating the amount of cooled coolant fluid that flows from the cooler into the compressor airend. The coolant fluid temperature is controlled to prevent condensation, for example, in a screw compressor package.

Typical TCVs use wax elements (e.g., wax thermostats) and/or electronic elements (e.g., stepper motors) to drive the operation of the TCVs. These elements are often unreliable and require constant maintenance, particularly replacement of dynamic seals, which are prone to leakage and other types of failure. Moreover, the wax thermostats keep coolant fluid temperatures at a constant high temperature, regardless of ambient conditions. Additionally, present TCVs are often large in dimension, as they must accommodate the various mechanical and electronic elements.

### Summary of the Invention

According to a first aspect of the present invention there is provided an electric hydraulic thermal control valve (EHTCV) system configured to control the temperature of a coolant fluid circulated to a compressor airend, the EHTCV system comprising:
a valve housing portion defining a chamber,
a solenoid valve coupled to the valve housing portion, and
a movable sleeve disposed within the chamber and configured to move between an idle position, at least one intermediate position, and an actuated position, the movable sleeve having a first end chamber coupled to the solenoid valve,
wherein when the solenoid valve is energized, the solenoid valve directs a portion of a coolant mixed fluid prior to being separated to the valve housing portion to move the movable sleeve towards the actuated position, the mixed fluid being a mix of coolant and working fluid compressed by the compressor airend.

The valve housing portion may further define a cold coolant fluid groove, a hot coolant fluid groove, and a coolant fluid outlet.

Preferably, the movable sleeve includes a second end chamber opposite the first end chamber, a coolant fluid sleeve inlet and a coolant fluid sleeve outlet, the coolant fluid sleeve inlet and the coolant fluid sleeve outlet in fluid communication with the second end chamber, and the coolant fluid sleeve outlet aligned with the coolant fluid outlet of the valve housing portion.

Preferably, at the idle position, the coolant fluid sleeve inlet and the hot coolant fluid groove are aligned, allowing hot coolant fluid into the second end chamber and through the coolant fluid outlet, by-passing a cooler.

At the actuated position, the coolant fluid sleeve inlet and the cold coolant fluid groove may be aligned, allowing cold coolant fluid into the second end chamber and through the coolant fluid outlet.

Preferably, at the at least one intermediate position the coolant fluid sleeve inlet rests between the hot coolant fluid groove and the cold coolant fluid groove, allowing both hot coolant fluid and cold coolant fluid into the second end chamber and through the coolant fluid outlet.

A dividing wall may be disposed between the first end chamber and the second end chamber, wherein the dividing wall defines at least one venting orifice configured to vent the fluid from the first end chamber into the second end chamber to reduce the pressure of the fluid in the first end chamber when the solenoid valve is de-energized, causing the movable sleeve to move from the actuated position toward the idle position.

A diameter of the first end chamber may be larger than the diameter of the second end chamber.

Preferably, the solenoid valve is in fluid communication with a working fluid inlet of the compressor airend, the solenoid valve configured to vent the fluid from the first end chamber to the working fluid inlet to reduce the pressure of the fluid in the first end chamber when the solenoid valve is de-energized and cause the movable sleeve to move from the actuated position toward the idle position.

The EHTCV system may further include a biasing component configured to bias the movable sleeve to the idle position, when the solenoid valve is not energized. The biasing component may be at least one of a compression spring or a tension spring.

According to a second aspect of the present invention there is provided a coolant circulation system for regulating a discharge temperature in a compressor airend, the coolant circulation system comprising:
a separator tank configured to separate a mixed fluid into a working fluid and a coolant fluid;
a cooler configured to cool the coolant fluid for circulation through the compressor airend; and
an EHTCV system according to the first aspect, the EHTCV system configured to control the temperature of the coolant fluid circulated to the compressor airend;
wherein when the solenoid valve is energized, the solenoid valve directs a portion of the coolant fluid from the separator tank to the valve housing portion to move the movable sleeve towards the actuated position.

### Drawings

The Detailed Description is described with reference to the accompanying figures. The use of the same reference numbers in different instances in the description and the figures may indicate similar or identical items.
FIG. 1 is an isometric view of a compressor assembly having a coolant circulation system with an electric hydraulic thermal control valve (EHTCV) in accordance with example embodiments of the present disclosure.
FIG. 2 is a top cross-sectional view of a compressor airend including the EHTCV shown in FIG. 1 cut along line 2-2, in accordance with example embodiments of the present disclosure.
FIG. 3 is an isometric cross-sectional view of the EHTCV shown in FIG. 1 cut along line 3-3, having a movable sleeve in an idle position, in accordance with example embodiments of the present disclosure.
FIG. 4 is an isometric cross-sectional view of the EHTCV shown in FIG. 1 cut along line 4-4, having a movable sleeve in an intermediate position, in accordance with example embodiments of the present disclosure.
FIG. 5 is an isometric cross-sectional side view of the EHTCV shown in FIG. 1 cut along line 5-5, having a movable sleeve in an actuated position, in accordance with example embodiments of the present disclosure.
FIG. 6 is an isometric cross-sectional side view of an EHTCV having a first end diameter that is greater than a second end diameter, in accordance with example embodiments of the present disclosure.
FIG. 7 is a schematic view of a fluid compressor system having a coolant circulation system including an EHTCV system with a two-way solenoid valve, in accordance with example embodiments of the present disclosure.
FIG. 8 is a schematic view of a fluid compressor system having a coolant circulation system including an EHTCV system with a three-way solenoid valve, in accordance with example embodiments of the present disclosure.

### Detailed Description

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

The present disclosure is directed to an electric hydraulic thermal control valve (EHTCV) system that dynamically regulates the temperature of coolant fluid entering into the compressor airend to maintain a desired airend discharge temperature in a fluid compressor system. The EHTCV system includes a solenoid valve that directs a portion of coolant fluid from the separation tank to apply pressure on a first end of a valve housing portion to actuate a movable sleeve from an idle position to an actuated position. In the idle position, the movable sleeve allows coolant fluid that has bypassed the cooler into the compressor airend. In the actuated position, the movable sleeve allows coolant fluid that has circulated through the cooler into the compressor airend. An EHTCV controller, in communication with a plurality of temperature and humidity sensors, controls the actuation of the solenoid valve to dynamically control the temperature of the coolant fluid flowing through the airend, resulting in a desired discharge temperature while avoiding condensation.

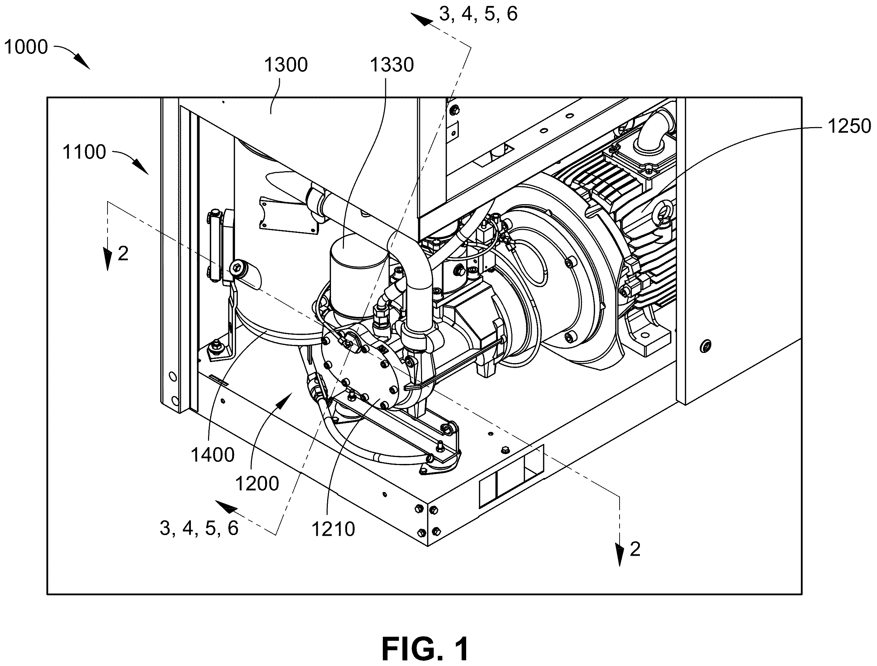

Referring generally to **FIGS. 1** through **8****,** a fluid compressor system **1000** is shown. The fluid compressor system **1000** includes a coolant circulation system **1100,** at least one compressor airend **1200,** a cooler **1300,** and a separation tank **1400.** The compressor airend **1200** compresses the working fluid (e.g., air, gas, etc.) of the fluid compressor system **1000** in at least a first compression stage. This compression stage increases the temperature of the working fluid. During the compression, the working fluid is mixed with a coolant fluid (e.g., oil, water, synthetic coolants, etc.) to reduce the temperature of the discharged working fluid and prevent water condensation in the discharged working fluid. The fluid discharged from the compressor airend **1200** is thus a working fluid and coolant fluid mixture. This discharge fluid is directed to the separation tank **1400** to separate the mixture back into the working fluid and the coolant fluid. The cooler **1300** cools the coolant fluid that will flow through the compressor airend **1200,** lowering the temperature of the working fluid prior to flowing to a next stage of the compression process.

The coolant circulation system **1100** includes an electric hydraulic thermal control valve (EHTCV) system **100,** hereinafter called the EHTCV **100.** The EHTCV 100 acts as a temperature management system of the coolant circulation system **1100,** controlling the temperature of a coolant fluid needed to send to the compressor airend **1200** in order to maintain a desired airend discharge temperature of the compressor airend **1200** and/or the desired discharge temperature of the fluid compressor system **1000.** In embodiments, the next stage of the compression process may be at least a second compression stage (not shown). However, the coolant circulation system **1100** may further provide cooling to more than two compression stages or a single-stage fluid compressor system as shown.

In the example embodiments described, the fluid compressor system **1000** includes a contact-cooled rotary (CCR) compressor, and the coolant used in the coolant circulation system **1100** is oil. In other embodiments, the coolant may be water, or another fluid configured to remove excess heat from the working fluid, keeping the airend discharge temperature within a desired temperature range.

The EHTCV **100** includes a valve housing portion **102,** a solenoid valve **110** coupled to the valve housing portion **102,** and a movable sleeve 120 disposed within the valve housing portion **102.** The valve housing portion **102** is defined (e.g., formed) within an airend casing **1210** of the compressor airend **1200.** The valve housing portion **102** comprises a chamber **104** and a coolant fluid outlet **106.** The chamber **104** houses the movable sleeve **120.** The coolant fluid outlet **106** is connected to a compression chamber **1220** of the compressor airend **1200.** In other embodiments, the valve housing portion **102** is coupled to a side of the casing **1210.** In some embodiments, the coolant fluid **106** outlet is directly connected to the compression chamber **1220.** In other embodiments (not shown), the valve housing may be separate from the airend housing, wherein the valve housing and the airend housing may be in fluid communication with one another.

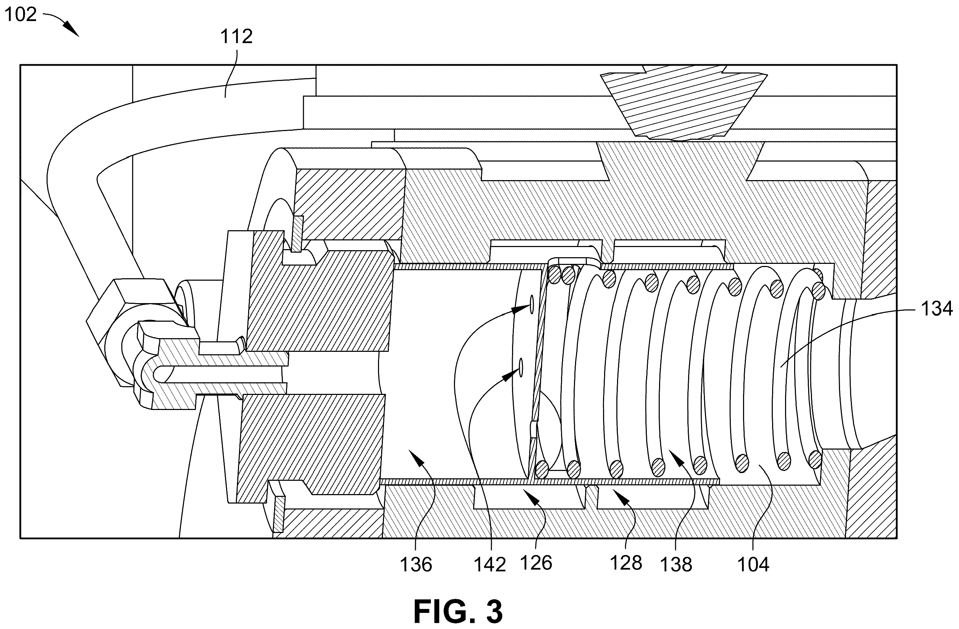

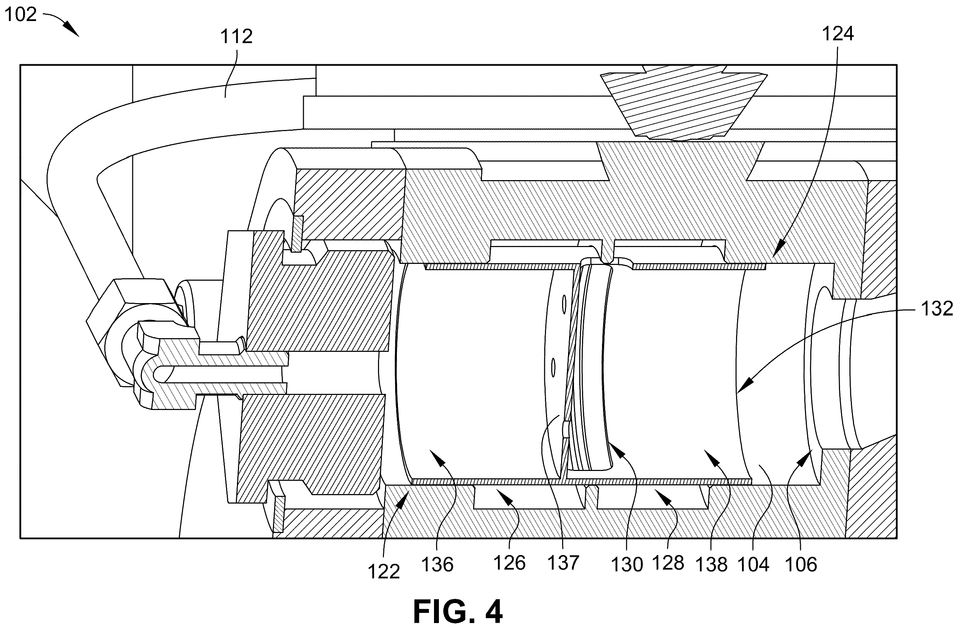

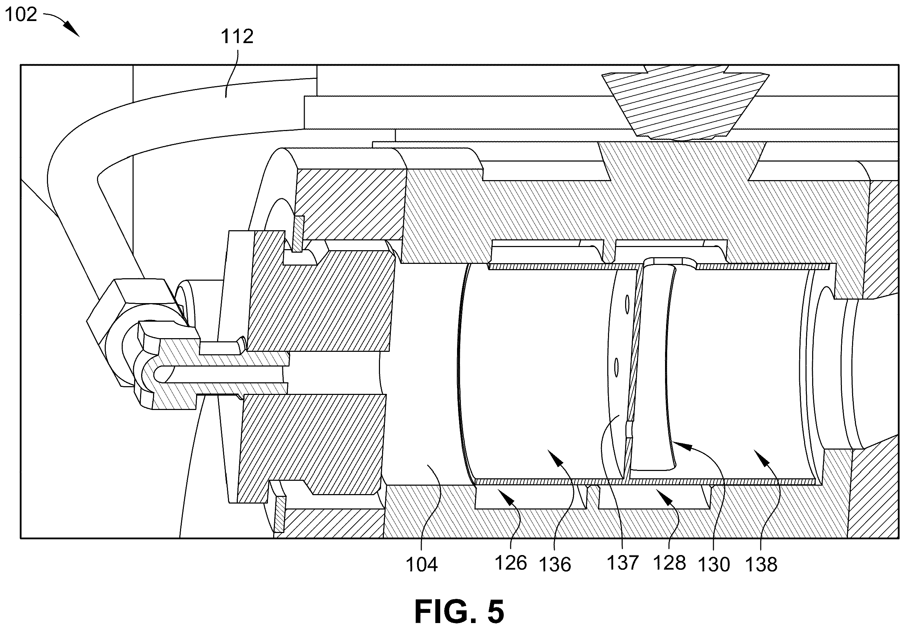

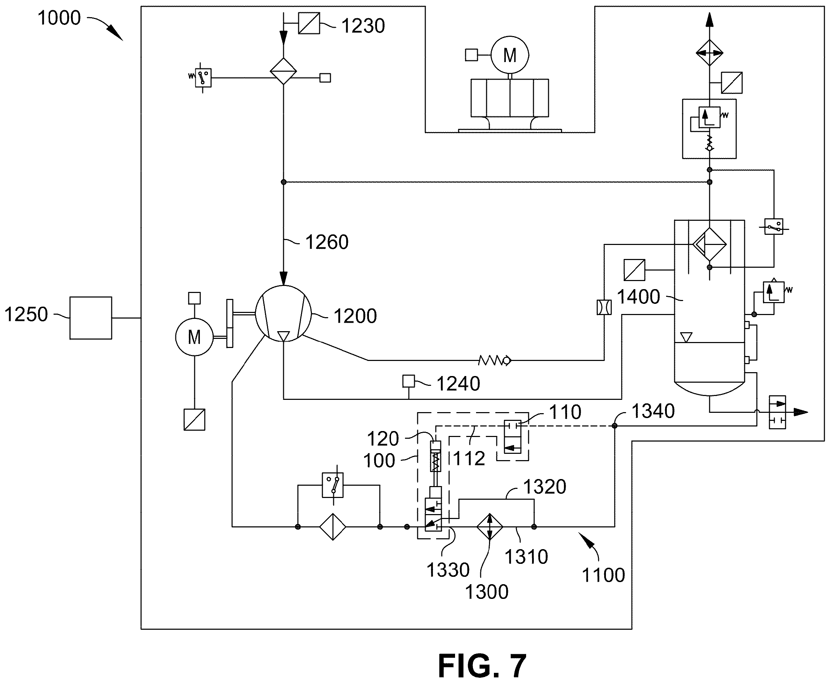

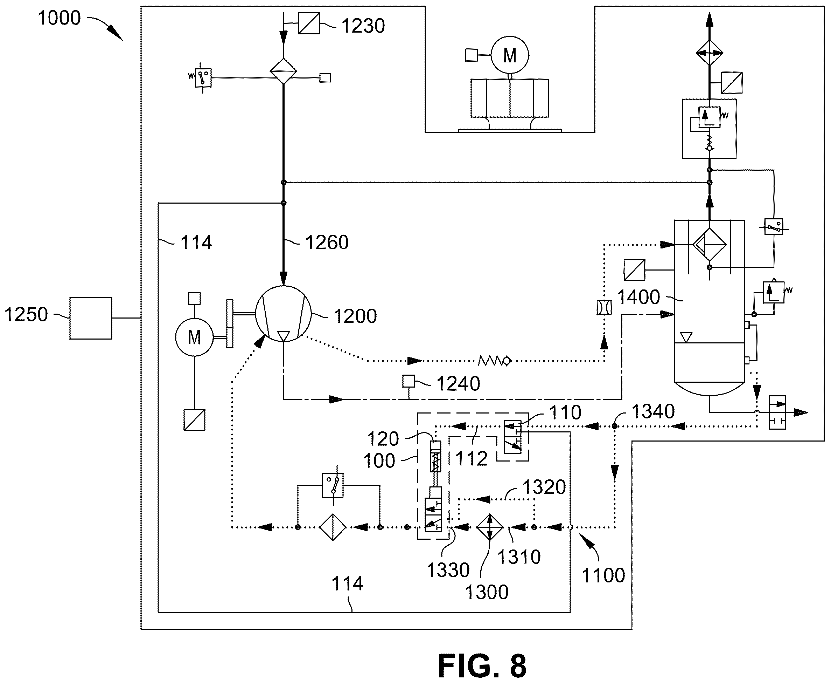

The solenoid valve **110** is disposed between the separation tank **1400** and the valve housing portion **102.** When energized, the solenoid valve **110** is configured to direct a portion of the coolant fluid from the separation tank **1400,** through a solenoid line **112,** to the valve housing portion **102.** The portion of the coolant fluid actuates the movable sleeve 120 by creating a pressure difference or pressure buildup that moves the movable sleeve **120** from an idle position (see **FIG. 3****),** through an intermediate position (see **FIG. 4****),** to an actuated position (see **FIG. 5****).** In example embodiments, described further below, the solenoid valve **110** may be either a two-way solenoid valve or a three-way solenoid valve. A two-way solenoid valve configuration is shown in the diagram illustrated in **FIG. 7****.** A three-way solenoid valve configuration is shown in the diagram illustrated in **FIG. 8****.** In other embodiments, the fluid compressor system **1000** having multiple compression stages may include both a two-way solenoid valve coupled to a first compression stage and a three-way solenoid valve coupled to a second compression stage.

The solenoid valve **110** is controlled by an EHTCV controller **1250** in communication with at least one sensor. Based on real-time, on-site conditions, the EHTCV controller **1250** is configured to energize the solenoid valve **110** of the EHTCV **100.** For example, the EHTCV controller **1250** may receive an input temperature, or a desired airend temperature to maintain. In embodiments, the EHTCV controller **1250** receives information from an inlet humidity sensor **1230** and a discharge temperature sensor **1240.** In other embodiments, the EHTCV controller **1250** may be in communication with more than one temperature sensor and/or more than one humidity sensor and/or other types of sensors, such as but not limited to airend temperature sensors, pressure sensors, working fluid humidity sensors, ambient temperature sensors, ambient humidity sensors, etc.

In embodiments, at least one temperature input of the airend discharge is provided to the EHTCV controller **1250** to control the solenoid valve **110** to position the movable sleeve **120** at a desired position from among the plurality of intermediate positions to achieve a desired airend coolant injection temperature. In addition to the airend discharge temperature input, an additional ambient humidity and ambient temperature input may be sent to the valve control system to allow for the calculation of a pressure-dew-point temperature for the working fluid and the coolant fluid mixture. The EHTCV controller **1250** may receive input from at least one of the inlet humidity sensor **1230,** the discharge temperature sensor **1240,** or another sensor, and control the position of the movable sleeve **120** of the solenoid valve **110** based on the sensor readings. This data may enable the valve control system to maintain the coldest airend discharge temperature possible without forming condensation in the coolant fluid.

As shown, the coolant circulation system **1100** includes a coolant manifold **1340** to direct the coolant fluid delivered by the separation tank **1400.** The coolant manifold **1340** may be coupled to at least the EHTCV **100,** a cooler line **1310,** and a bypass line **1320.** During operation, after being separated from the working fluid in the separation tank **1400,** the coolant fluid may be directed to the cooler **1300** through the cooler line **1310** or bypass the cooler **1300** through the bypass line **1320.** The cooled coolant fluid may exit the cooler **1300** through a cooler line **1330.**

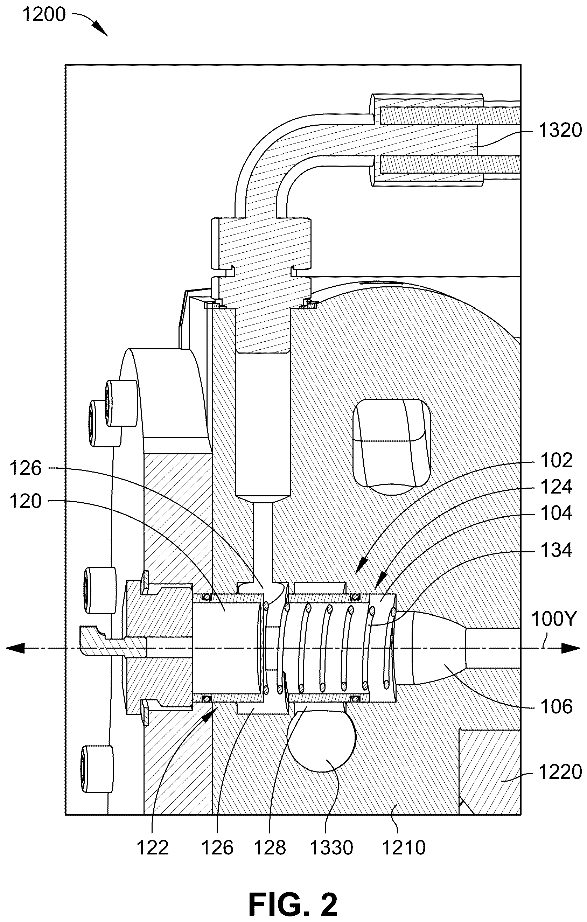

As shown in **FIGS. 2** through **6****,** the valve housing portion **102** includes a hot coolant fluid groove **126** and a cold coolant fluid groove **128** defined around the chamber **104.** The cold coolant fluid groove **128** is configured to receive the coolant fluid flow from the cooler **1300** through the cooler line **1330.** The hot coolant fluid groove **126** is configured to receive the coolant fluid that bypasses the cooler **1300** through the bypass line **1320.**

As shown in **FIG. 4****,** the movable sleeve **120** is disposed within the chamber **104** and includes a coolant fluid sleeve inlet **130,** a coolant fluid sleeve outlet **132,** a first end **122,** and a second end **124** along a longitudinal axis **100Y,** the second end **124** opposite the first end **122.** The movable sleeve **120** defines a first end chamber **136** proximate to the first end **122** and a second end chamber **138** proximate to the second end **124.** A dividing wall **137** divides the first end chamber **136** from the second end chamber **138.** The coolant fluid sleeve inlet **130** is disposed on a surface of the movable sleeve **120** and fluidly connects the chamber **104** with the second end chamber **138.**

As shown in **FIGS. 3** through **5****,** the movable sleeve **120** is configured to be moved between a plurality of positions along the longitudinal axis **100Y.** As the solenoid valve **110** is energized by the EHTCV controller **1250,** it directs coolant fluid from the separator tank **1400** to the first end chamber **136.** As the coolant fluid fills the first end chamber **136,** it causes a pressure buildup on the first end **122** of the movable sleeve **120** and pushes the movable sleeve **120** along the longitudinal axis **100Y** in the direction of the second end **124.** In other embodiments (not shown) the solenoid valve **110** may be connected upstream of the separator tank **1400,** where the solenoid valve directs a working fluid and coolant mixture to the first end chamber **136** and creating the pressure buildup.

For example, the movable sleeve is configured to move between an idle position **(****FIG. 3****),** an intermediate position **(****FIG. 4****),** and an actuated position **(****FIG. 5****).** Depending on a position of the movable sleeve, the coolant fluid sleeve inlet **130** may be located adjacent (fluidly coupled) to the hot coolant fluid groove **126,** allowing a coolant fluid flow that has bypassed the cooler **1300,** or adjacent (fluidly coupled) to the cold coolant fluid groove **128,** allowing a coolant fluid flow that has passed through the cooler **1300,** into the second end chamber **138.** The coolant fluid sleeve outlet **132** is axially aligned to the coolant fluid outlet **106** along axis **100Y** and is configured to fluidly connect the second end chamber **138** with the coolant fluid outlet **106.**

Based on the sensor readings sent to the EHTCV controller **1250,** the solenoid valve **110** may be energized or de-energized to move the movable sleeve **120** depending on the desired temperature of the coolant fluid entering the compression chamber **1220.** If the temperature of the coolant fluid mixing with the working fluid in the compression chamber **1220** is to be decreased, the solenoid valve **110** is energized to create a pressure buildup in the first end chamber **136.** The movable sleeve **120** is moved to the actuated position, allowing coolant fluid delivered by the cooler **1300** to flow through the second end chamber **138** and into the compression chamber **1220.** In contrast, if the temperature of the discharged fluid is to be increased, the solenoid valve remains de-energized, allowing the first end chamber **136** of the movable sleeve to vent the built-up pressure, and allowing the movable sleeve **120** to move back to the idle position. In this idle position, the movable sleeve allows the coolant fluid bypassing the cooler **1300** to flow through the second end chamber **138** and into the compression chamber **1220.**

The movable sleeve **120** moves from the actuated position through the plurality of intermediate positions and into the idle position when the built-up pressure in the first end chamber **136** is vented. In example embodiments where the solenoid valve **110** is a two-way solenoid valve, as shown in **FIG. 7****,** the dividing wall **137** includes at least one venting orifice **142.** The at least one venting orifice **142** is configured to vent the fluid from the first end chamber **136** into the second end chamber **138** to reduce the pressure of the fluid in the first end chamber **136** when the solenoid valve **110** is de-energized. By venting the built-up pressure, the movable sleeve **120** is able to move from the actuated position toward the idle position. This movement may be further facilitated by a biasing component **134,** as discussed below.

In example embodiments, as shown in **FIGS. 2** and **3****,** the movable sleeve **120** is biased in a direction towards the first end **122** by the biasing component (e.g., a spring) **134.** The biasing component **134** may mechanically and/or magnetically bias the movable sleeve **120** towards a desired position. For example, the biasing component **134** may be a compression spring, a tension spring, or the like. In the embodiment shown, the biasing component **134** is configured to return the movable sleeve **120** to the idle position when the solenoid valve **110** is no longer energized by the EHTCV controller **1250,** directing the coolant fluid flow that has bypassed the cooler **1300** into the compression chamber **1220.** If the coolant circulation system **1100** or the fluid compressor system **1000** is shut down, the movable sleeve **120** would remain biased towards the idle position.

In other embodiments (not shown), the biasing component **134** may bias the movable sleeve **120** towards the second end **124.** In other embodiments (not shown) the EHTCV **100** may include a plurality of biasing components **134** or may not include any biasing component **134** biasing the movable sleeve **120** towards any predetermined position.

In example embodiments where the solenoid valve **110** is a three-way solenoid valve, as shown in FIG. **8****,** the solenoid valve **110** is configured to supply a pressure build-up to the first-end chamber **136** of the movable sleeve **120,** and vent the pressure built-up in the first-end chamber **136** of the movable sleeve **120.** The solenoid valve **110** is connected to an intake line **1260** of the compressor airend **1200** via a vent line **114.** The solenoid valve **110** is configured to vent the fluid from the first end chamber **136** to reduce the pressure of the fluid in the first end chamber 136. By venting the built-up pressure, the movable sleeve **120** is able to move from the actuated position toward the idle position and allow hot coolant fluid flow, or the coolant fluid flow that bypassed the cooler **1300,** to flow into the compression chamber **1220** of the compressor airend **1200.**

In example embodiments, the solenoid valve **110** is a proportional solenoid valve, where the valve's position moves proportionally to the current applied to it by the EHTCV control. The more current is supplied to the solenoid valve **110,** the higher the pressure build-up of coolant fluid within the first-end chamber **136** is. This relationship between the current supplied to the solenoid valve **110** and the pressure build-up in the first end chamber **136** allows to vary the movement of the movable sleeve to a plurality of intermediate positions by controlling the amount of the current supplied to the solenoid valve **110,** which in turn controls the temperature of coolant fluid flowing to the compression chamber **1220.**

If the temperature of the working fluid and/or the airend discharge temperature exceeds a predetermined range, the valve EHTCV controller **1250** fully energizes the solenoid valve **110,** actuating the movable sleeve **120** to the actuated position, where the coolant fluid sleeve inlet **130** is completely open to the cold coolant fluid groove **128.** This directs the entirety of the cold coolant fluid flow from the cooler line **1330** to the compression chamber **1220** through the second end chamber **138** of the movable sleeve **120.** If the desired temperature of the working fluid and/or the airend discharge temperature reaches a desired temperature, the EHTCV controller **1250** may vent the EHTCV **100** and move the movable sleeve to one of the plurality of intermediate positions, where the coolant fluid sleeve inlet **130** is partially open to the cold coolant fluid groove **128** and the hot coolant fluid groove **126.** If the temperature of the working fluid and/or the airend discharge temperature drops below a predetermined range, the valve EHTCV controller **1250** fully deenergizes the solenoid valve **110,** moving the movable sleeve **120** to the idle position, where the coolant fluid sleeve inlet **130** is completely open to the hot coolant fluid groove **126.** This directs the entirety of the bypassed coolant fluid flow from the bypass line **1320** to the compression chamber **1220** through the second end chamber **138** of the movable sleeve **120.**

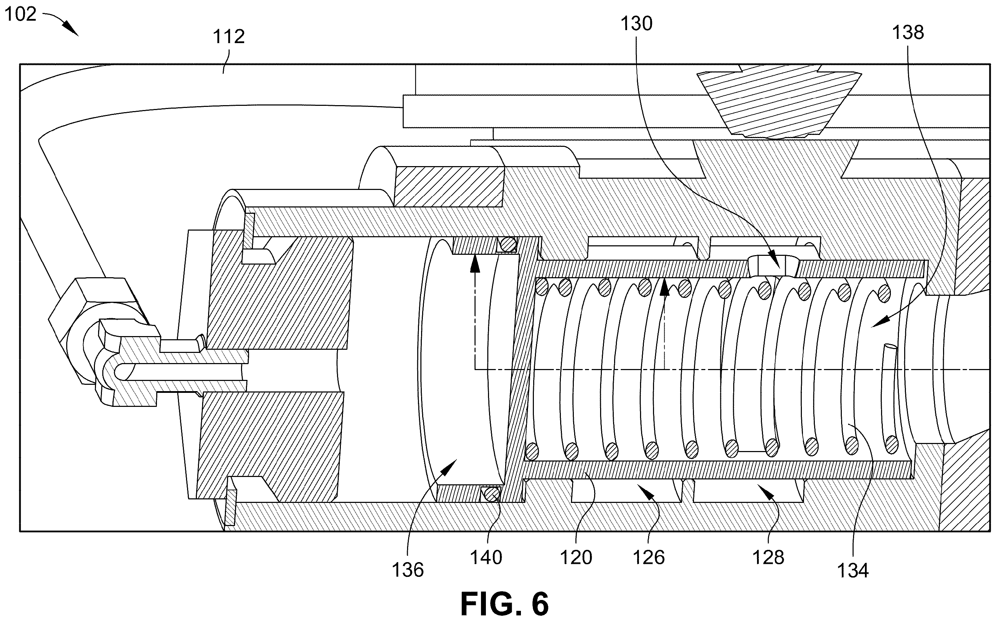

Referring to **FIG. 6****,** the movable sleeve **120** may have a first end chamber **136** having a diameter greater than the diameter of the second end chamber **138.** In these embodiments, the surface area of the retaining wall **137** on the first end chamber **136** is greater than the surface area of the retaining wall on the second end chamber **138.** This change in the volume and area of the first end chamber increases the force available for moving the movable sleeve **120** with a low differential pressure. This embodiment may be used with a two-way solenoid valve **110** and/or with a three-way solenoid valve **110.**

In the example embodiment shown in **FIG. 6****,** the seal **140** is an O-ring seal. The seal **140** is configured to provide sealing and temperature control to the movable sleeve **120.** In other example embodiments, the seal may be a U-ring, a V-ring, a flat seal, a lip seal, guide rings, among others. The ring seals may be composed of Polytetrafluoroethylene (PTFE), nitrile, neoprene, ethylene propylene diene monomer (EPDM) rubber, a fluorocarbon rubber, or a combination thereof. This embodiment may be used with a two-way solenoid valve **110** and/or with a three-way solenoid valve **110.**

Additionally, the EHTCV controller **1250** may be in communication with a controller that controls a variable speed cooling fan on air cooled compressor packages, for improved energy efficiency of a fan motor energy consumption (i.e.: slow it down as appropriate). The valve control system may also use the data acquired by one or more of the sensors discussed above to send to the controller for the operation of other compressor components such as, but not limited to, drain valves and integrated dryers, or external system components such as standalone dryers and drain valves.

In another embodiment (not shown), the EHTCV **100** may be connected differently to the components of the coolant circulation system **1100,** including but not limited to the separator tank **1400,** the cooler **1300,** such as an evaporator or a heat exchanger, the compressor airend **1200,** another temperature controlled valve (TCV), another EHTCV, etc. For example, in the CCR compressor, after being separated from the working fluid and discharged from the separator tank **1400,** the EHTCV **100** may control the amount of coolant fluid that is delivered to the cooler **1300.** The EHTCV **100** may be disposed between the separator tank **1400** and the cooler **1300,** where the EHTCV **100** can control and selectably direct the coolant flow in the coolant circulation system **1100** towards the cooler (e.g., the evaporator) or the airend **1200** based on the desired temperature of the coolant flow.

In another embodiment (not shown), the coolant circulation system **1100** may include a first cooler, a second cooler, a primary EHTCV and a secondary EHTCV fluidly connected to a respective contact-cooled airend. In this embodiment, the coolant fluid may be directed to a secondary EHTCV after exiting a first cooler, where the secondary EHTCV selectably directs the cooled coolant to a second cooler for further cooling or back into the contact-cooled airend through the primary EHTCV, depending on the desired temperature of the coolant prior to entering the contact-cooled airend. In example embodiments, the fluid compressor system **1000** may have any number of EHTCVs and is not limited to having only a primary and a secondary EHTCV in connection with a respective airend. In embodiments, the cooler **1300** may be a brazed plate heat exchanger, but any other type of heat exchanger may be used to absorb heat from the hot coolant according to example embodiments of the present disclosure.

In example embodiments, the fluid compressor system **1000** includes a CCR screw compressor. In other example embodiments (not shown), the fluid compressor system **1000** may have an oil-free rotary (OFR) screw compressor, a rotary vane compressor, a reciprocating compressor, a centrifugal compressor, or an axial compressor. In other example embodiments, the EHTCV may be incorporated or retrofitted with other equipment having a compression application, including but not limited to, heating, ventilation, and air conditioning (HVAC) systems, refrigeration systems, gas turbine systems, automotive applications, and so forth. In yet another example, the EHTCV may be used as a three-way valve and used in operations with power tools, pumps, blowers, medical devices, etc.

While the subject matter has been illustrated and described in detail in the drawings and foregoing description, the same is to be considered as illustrative and not restrictive in character, it being understood that only some embodiments have been shown and described and that all changes and modifications that come within the spirit of the subject matter are desired to be protected. In reading the claims, it is intended that when words such as "a," "an," "at least one," or "at least one portion" are used there is no intention to limit the claim to only one item unless specifically stated to the contrary in the claim. Unless specified or limited otherwise, the terms "mounted," "connected," and "coupled" and variations thereof are used broadly and can encompass both direct and indirect mountings, connections, supports, and couplings. Further, "connected" and "coupled" are not necessarily restricted to physical or mechanical connections or couplings.

## Claims

1. An electric hydraulic thermal control valve (EHTCV) system configured to control the temperature of a coolant fluid circulated to a compressor airend, the EHTCV system comprising:
a valve housing portion defining a chamber,
a solenoid valve coupled to the valve housing portion, and
a movable sleeve disposed within the chamber and configured to move between an idle position, at least one intermediate position, and an actuated position, the movable sleeve having a first end chamber coupled to the solenoid valve,
wherein when the solenoid valve is energized, the solenoid valve directs a portion of a coolant mixed fluid prior to being separated to the valve housing portion to move the movable sleeve towards the actuated position, the mixed fluid being a mix of coolant and working fluid compressed by the compressor airend.

2. The EHTCV system of claim 1, wherein the valve housing portion further defines a cold coolant fluid groove, a hot coolant fluid groove, and a coolant fluid outlet.

3. The EHTCV system of claim 2, wherein the movable sleeve includes a second end chamber opposite the first end chamber, a coolant fluid sleeve inlet and a coolant fluid sleeve outlet, the coolant fluid sleeve inlet and the coolant fluid sleeve outlet in fluid communication with the second end chamber, and the coolant fluid sleeve outlet aligned with the coolant fluid outlet of the valve housing portion.

4. The EHTCV system of claim 3, wherein at the idle position, the coolant fluid sleeve inlet and the hot coolant fluid groove are aligned, allowing hot coolant fluid into the second end chamber and through the coolant fluid outlet, by-passing a cooler.

5. The EHTCV system of claim 3 or claim 4, wherein at the actuated position, the coolant fluid sleeve inlet and the cold coolant fluid groove are aligned, allowing cold coolant fluid into the second end chamber and through the coolant fluid outlet.

6. The EHTCV system of any of claims 3 to 5, wherein at the at least one intermediate position, the coolant fluid sleeve inlet rests between the hot coolant fluid groove and the cold coolant fluid groove, allowing both hot coolant fluid and cold coolant fluid into the second end chamber and through the coolant fluid outlet.

7. The EHTCV system of claim 3, wherein a dividing wall is disposed between the first end chamber and the second end chamber, wherein the dividing wall defines at least one venting orifice configured to vent the fluid from the first end chamber into the second end chamber to reduce the pressure of the fluid in the first end chamber when the solenoid valve is de-energized, causing the movable sleeve to move from the actuated position toward the idle position.

8. The EHTCV system of claim 3, wherein a diameter of the first end chamber is larger than the diameter of the second end chamber.

9. The EHTCV system of claim 1, wherein the solenoid valve is in fluid communication with a working fluid inlet of the compressor airend, the solenoid valve configured to vent the fluid from the first end chamber to the working fluid inlet to reduce the pressure of the fluid in the first end chamber when the solenoid valve is de-energized and cause the movable sleeve to move from the actuated position toward the idle position.

10. The EHTCV system of claim 1, further including a biasing component configured to bias the movable sleeve to the idle position, when the solenoid valve is not energized.

11. The EHTCV system of claim 10, wherein the biasing component is at least one of a compression spring or a tension spring.

12. A coolant circulation system for regulating a discharge temperature in a compressor airend, the coolant circulation system comprising:
a separator tank configured to separate a mixed fluid into a working fluid and
a coolant fluid;
a cooler configured to cool the coolant fluid for circulation through the compressor airend; and
an EHTCV system according to any preceding claim, the EHTCV system configured to control the temperature of the coolant fluid circulated to the compressor airend;
wherein when the solenoid valve is energized, the solenoid valve directs a portion of the coolant fluid from the separator tank to the valve housing portion to move the movable sleeve towards the actuated position.
